# EUROPÄISCHE PATENTANMELDUNG

(11) **EP 0 526 750 A1**
(43) Veröffentlichungstag der Anmeldung: **10.02.1993**
(21) Anmeldenummer: 92111610.9
(22) Anmeldetag: 08.07.1992
(51) Int. Cl.: G03H 1/22

(54) **Holographische Messmarken**

(30) Priorität: 20.07.1991 DE 4124203
(71) Anmelder: Fried. Krupp AG, D-45143 Essen (DE)
(72) Erfinder: Hauck, Richard, Dr. Dipl.-Phys., W-4224 Hünxe (DE); Schröder, Horst, Dipl.-Phys., W-5245 Mudersbach (DE); Windeln, Wilbert, Dr., W-5138 Heinsberg (DE)

(57) **Zusammenfassung**

Die Erfindung betrifft die Erweiterung von Hologrammen als holographisch-optische Elemente (HOE) oder für Meßzwecke durch rekonstruktionsfähige Marken auf demselben Träger. Durch ihre Ausgestaltung erlauben die Marken die Bestimmung der Orientierung und der Lage der Hologramme relativ zu anderen Komponenten eines optischen Aufbaues. Damit wird die Justage eines Aufbaues zur interferometrischen Herstellung eines Hologrammes oder eines Aufbaues zur Vermessung eines Hologrammes oder die Ausrichtung eines Hologrammes beim Einbau in ein Gerät ermöglicht.

## Beschreibung

Die Erfindung betrifft ein holographisches Beugungsgitter, das als holographisch-optisches Element (HOE) und/oder für Meßzwecke nutzbar ist. Ferner betrifft die Erfindung ein Verfahren zur interferometrischen Herstellung eines holographischen Beugungsgitters der genannten Art mittels eines konventionellen optischen Systems und/oder mit computer-generierten Hologrammen (CGH).

Seit einiger Zeit werden holographisch-optische Elemente (HOE) als neuartige Komponenten für komplexe Aufgabenstellungen entwickelt. Ein aufgrund positiver Eigenschaften für viele Anwendungen besonders geeigneter und damit ökonomisch bedeutsamer Typ von HOE sind Volumen-Phasenhologramme, die z.B. in Dichromat-Gelatine-Filmen hergestellt werden können. Zur Erzeugung eines solchen HOE müssen (mindestens) zwei kohärente Lichtwellen am Ort des Filmes überlagert werden. Diese Wellen können im einfachsten Fall ebene oder Kugelwellen sein und müssen durch Hilfsoptiken erzeugt werden. Im Regelfall benötigt man asphärische Wellen, die durch die Kombination von konventionellen (Glas-)Komponenten mit computer-generierten Hologrammen (CGH) kostengünstig hergestellt werden können. Eine auch heute noch gültige Darstellung dieses Themenkreises findet sich in der Druckschrift R.C. Fairchild, J.R. Fienup "Computer-originated hologram lenses", Proc. SPIE Vol. 215, "Recent Advances in Holography" (1980), Seiten 2 bis 14, sowie in der Druckschrift R.J. Collier, C.B. Burckhardt und L.H. Lin "Optical Holography" (Academic Press 1971).

Bei der Herstellung, der Vermessung und dem Einbau von holographischen Beugungsgittern bzw. HOE tritt insbesondere im Rahmen einer Serienfertigung die Notwendigkeit auf, möglichst einfach Informationen über die Lage und Orientierung einzelner Komponenten zu erhalten. So müssen bei der Herstellung von HOE sowohl die relative Lage als auch die Abstände des CGH, des HOE und weiterer Hilfsoptiken genau eingehalten werden.

Es ist daher Aufgabe der vorliegenden Erfindung, das bekannte holographische Beugungsgitter sowie das Verfahren zu seiner Herstellung derart weiterzuentwickeln, daß ohne Beeinträchtigung der optischen Funktion des HOE's und/oder der Meßfunktion eine reproduzierbare Möglichkeit zur Feststellung der Lage und Orientierung der holographischen Beugungsgitter zu einer vorgegebenen Bezugsfläche geschaffen wird. Die optische Funktion des HOE's und/oder die Meßfunktion wird von dem hier genannten Primärbereich bewirkt.

Die Aufgabe wird durch das im Anspruch 1 angegebene holographische Beugungsgitter gelöst, das dadurch gekennzeichnet ist, daß zusätzlich zum optisch genutzten Primärbereich rekonstruktionsfähige Marken angebracht werden, welche auf einer vorgegebenen Referenzfläche definierte Amplituden- und/oder Phasenverteilungen erzeugen. Vorzugsweise werden die Marken räumlich getrennt vom Primärbereich angeordnet, um dessen optische Funktion nicht zu beeinträchtigen. Sie sollen zweckmäßig zusammen mit dem Primärbereich rekonstruktionsfähig sein. Die von den Marken erzeugten Amplituden- und/oder Phasenverteilungen erlauben durch ihre Größe, Lage und/oder Schärfe entweder direkt oder durch Vergleich mit einer Referenzmaske mit geeigneten Marken die Erkennung der relativen Lage des holographischen Beugungsgitters und der vorgegebenen Fläche. Damit wird die Justage eines Aufbaues zur interferometrischen Herstellung eines Hologrammes oder eines Aufbaues zur Vermessung eines Hologrammes oder die Ausrichtung eines Hologrammes beim Einbau in ein Gerät ermöglicht.

Vorzugsweise werden die Marken unsymmetrisch angeordnet oder ausgestaltet, so daß außer der Lage auch die relative Orientierung des Beugungsgitters feststellbar ist.

Die Marken selbst können eine Amplituden-und/oder Phasenmodulation aufweisen.

Die auf der Referenzfläche erzeugten Verteilungen können beispielsweise Intensitätsverteilungen in der Form eines Punktes, Kreuzes oder Winkels sein.

Die das Verfahren betreffende Aufgabe wird durch die Maßnahme nach Anspruch 6 gelöst. Die Neuerung besteht darin, daß auf einer das computer-generierte Hologramm enthaltenden Maske zusätzlich zum Primärbereich Marken angebracht werden, die mit einer ähnlichen, vorzugsweise derselben Ortsfrequenz wie der primäre Bereich moduliert sind und zusätzlich eine Amplituden-und/oder Phasenmodulation zur Erzeugung eines vorgebbaren geometrischen Musters enthalten, wobei die Marken zusammen mit dem computer-generierten Hologramm auf das holographisch-optische Element derart abgebildet werden, daß die Marken neue Marken im HOE erzeugen. Die Modulationsfrequenz der Marken wird derart gewählt, daß das gebeugte Licht im wesentlichen parallel zum Nutzlicht abgelenkt und somit durch dieselbe Optik zwischen CGH und HOE zum HOE geführt wird. Vorzugsweise ist die Modulationsfrequenz der Marken identisch zur Trägerfrequenz des primären CGH's zu wählen. Wird zur Herstellung eines speziellen Hologrammes kein CGH benötigt, so können die Marken auf einer separaten Maske angebracht werden, die anstelle eines CGH in den Aufbau eingebracht wird. Diese Maske kann formal als CGH mit verschwindender optischer Funktion betrachtet werden.

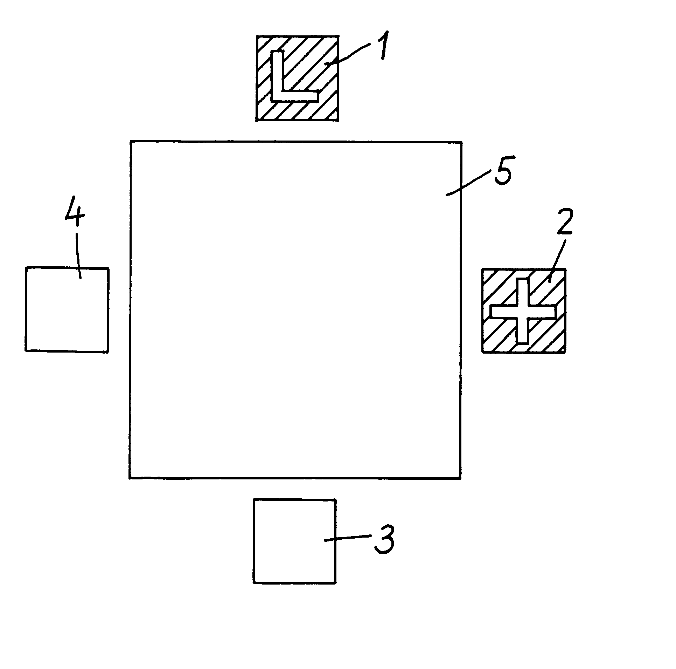

Ein Ausführungsbeispiel der Erfindung wird anhand der Zeichnung erläutert, die ein primäres CGH mit außerhalb des primären Bereiches angeordneten Meßmarken schematisch zeigt.

Die einzige Figur zeigt schematisch Marken 1 bis 4, wobei die senkrechten Streifen in den Marken 1 bis 4 die aufmodulierte Trägerfrequenz andeuten. Zusätzlich sind durch Amplitudenmodulation ein Winkel in L-Form und ein Kreuz dargestellt, wobei die Gestaltung der Marke 1 neben der Justage auch eine Orientierung bei der Abbildung bzw. Ausrichtung erlaubt. Die Marken 1 bis 4 befinden sich außerhalb des mit Bezugszeichen 5 dargestellten primären computer-generierten Hologrammes, das somit unbeeinträchtigt ist.

Zur Herstellung eines holographisch-optischen Elementes werden mindestens ein CGH, die HOE-Aufnahmeplatte und geeignete weitere optische Komponenten benötigt. Die Bestandteile werden so angeordnet, daß Licht, das zunächst das CGH durchläuft, auf das HOE fällt. Zur Justage des Aufbaues wird an den Ort des HOE eine Maske mit Marken gebracht. Durch die Beleuchtung des CGH werden nun auf dieser Maske Intensitätsverteilungen erzeugt, die durch Vergleiche mit den Marken der Hilfsmaske bezüglich Größe, Lage und Schärfe die Justage des Aufbaues ermöglichen. Da CGH und HOE bzw. die Hilfsmaske nicht in parallelen Ebenen stehen müssen und auch eine optische Abbildung nicht zwingend ist, wird es im allgemeinen nötig sein, die genaue Lage und Gestalt der Marken auf dem CGH durch Berechnung der Lichtstrahlen (ray-tracing) zu bestimmen.

Die Marken werden bei der Belichtung des HOE mit einbelichtet und erzeugen wiederum rekonstruierbare Marken im HOE.

Zur Justage eines Meßaufbaues kann der Weg beschritten werden, der dem der Aufnahme des HOE entspricht. Die Marken einer Meßmaske erzeugen hierbei auf dem HOE Lichtverteilungen, die mit den dortigen Marken korreliert werden. Andererseits ist es ebenso möglich, den Lichtweg umzudrehen, also die Marken im HOE zu rekonstruieren und dadurch entsprechende Lichtverteilungen auf den Marken einer Meßmaske zu erzeugen. In beiden Anordnungen kann damit die relative Lage der Komponenten eingestellt werden, so daß eine Vermessung des primären Bereiches des HOE ermöglicht wird.

Die Marken im HOE sind bei geeigneter Beleuchtung direkt sichtbar und können zur Feststellung der Orientierung und zur Justage des HOE beim Einbau in einen Nutzaufbau verwendet werden.

## Patentansprüche

1. Holographisches Beugungsgitter, das als holographischoptisches Element (HOE) und/oder für Meßzwecke nutzbar ist,
dadurch gekennzeichnet,
daß zusätzlich zum optisch genutzten Bereich (Primärbereich) des HOE's und/oder der Meßfunktion rekonstruktionsfähige Marken angebracht sind, welche auf einer vorgegebenen Fläche definierte Amplituden- und/oder Phasenverteilungen erzeugen, die entweder direkt oder durch Vergleich mit einer Referenzmaske zur Erkennung der relativen Lage des holographischen Beugungsgitters und der vorgegebenen Fläche geeignet sind.

2. Holographisches Beugungsgitter nach Anspruch 1, dadurch gekennzeichnet, daß die Marken zusammen mit dem Primärbereich rekonstruktionsfähig sind.

3. Holographisches Beugungsgitter nach Anspruch 1 oder 2, dadurch gekennzeichnet, daß die Marken unsymmetrisch angeordnet oder ausgestaltet sind, so daß außer der Lage auch die relative Orientierung feststellbar ist.

4. Holographisches Beugungsgitter nach Anspruch 1, 2 oder 3, dadurch gekennzeichnet, daß die Marken eine Amplituden- und/oder Phasenmodulation aufweisen.

5. Holographisches Beugungsgitter nach einem der Ansprüche 1 bis 4, dadurch gekennzeichnet, daß die erzeugten Intensitätsverteilungen die Form eines Kreuzes, Winkels oder Punktes haben.

6. Verfahren zur interferometrischen Herstellung eines holographischen Beugungsgitters nach einem der Ansprüche 1 bis 5 mittels eines konventionellen optischen Systems und/oder mit computer-generierten Hologrammen (CGH), dadurch gekennzeichnet, daß auf einer CGH-Maske zusätzlich zum primären Bereich Marken aufgebracht werden, die mit einer ähnlichen, vorzugsweise derselben Ortsfrequenz wie der primäre Bereich moduliert sind und zusätzlich eine Amplituden- und/oder Phasenmodulation zur Erzeugung eines vorgebbaren geometrischen Musters enthalten, wobei die Marken zusammen mit dem computer-generierten Hologramm auf das holographisch-optische Element derart abgebildet werden, daß die Marken neue Marken im HOE erzeugen.

7. Verfahren zur Justage eines Aufbaues zur Vermessung eines HOE, dadurch gekennzeichnet, daß die nach Anspruch 6 im HOE erzeugten Marken ihrerseits Lichtverteilungen auf einer Meßmaske erzeugen, die mit den dort befindlichen Marken korreliert werden.

8. Verfahren zur Justage eines Aufbaues zur Vermessung eines HOE, dadurch gekennzeichnet, daß die Marken der Meßmaske Lichtverteilungen auf dem HOE erzeugen, die mit den dort befindlichen, nach Anspruch 6 erstellten Marken korreliert werden.
